# EUROPEAN PATENT APPLICATION

(11) **EP 2 784 785 A1**
(43) Date of publication of application: **01.10.2014**
(21) Application number: 13161116.2
(22) Date of filing: 26.03.2013
(51) Int. Cl.: H01B 7/00, H01R 9/03, H01R 13/50, H02G 15/06

(54) **Cable assembly**

(71) Applicant: Tyco Electronics Nederland B.V., 5222 AR's-Hertogenbosch (NL)
(72) Inventor: Van Tilburg, Jan, 5345 GJ Oss (NL)
(74) Representative: Grünecker, Kinkeldey, Stockmair & Schwanhäusser

(57) **Abstract**

The present invention relates to a cable assembly (1) for contacting a connector (14) to a connector assembly (15) comprising the cable assembly (1), as well as a method of connecting a connector (14) to a cable (3). The object of the invention is to provide a solution that allows a better connection between a connector (14) and a cable (3). The object is achieved by a cable assembly (1) for contacting a connector (14) comprising a cable (3) having at least one conductor (2) surrounded by a shielding layer (6), which in turn is surrounded by a jacket (10), wherein the shielding layer (6) extends out of a front surface (10) of the jacket (10) at a forward end (8) of the cable (3), wherein the cable (3) comprises a crimp section (12) at the forward end (8) of the cable (3), the crimp section (12) being adapted to be crimped to the connector (14), wherein the cable assembly (1) comprises a thickening element (11) arranged around the shielding layer (6) and projecting radially outward with respect to the cable (3), the shielding layer (6) being folded back to the crimp section (12) over the thickening element (11).

## Description

The invention relates to a cable assembly for contacting a connector. Cables often have at least one conductor that is surrounded by a shielding layer, which in turn is surrounded by a jacket. The shielding layer usually extends out of a front surface of the jacket at a forward end of the cable in order to contact an outer part of the connector. The shielding layer could be an electrical shielding layer that serves to shield the conductor from electrical noise. This electrical shielding layer could be connected to an electrically conductive housing of the connector. In many cases, the connector is attached to the cable by crimping. Usually, the shielding layer is folded back onto the jacket of the cable and a crimpable part of the connector is crimped onto the folded-back shielding layer at a crimp section, creating a force fit between the cable and the connector.

It has, however, turned out that in many cases the connection strength of the cable assembly and the connector is not sufficient. When pulling on the cable, the connection between the connector and the cable becomes loose and/or solder connections partly break at values of the pulling force that are too low for many applications. Mostly, signal wires are thin and break even with low pulling forces.

The object of the invention is to provide a solution that allows a better connection between a connector and a cable and to avoid in particular a breaking of the conductors connected with the connector.

The object is achieved by a cable assembly for contacting a connector comprising a cable having at least one conductor surrounded by a shielding layer, which in turn is surrounded by a jacket, wherein the shielding layer extends out of a front surface of the jacket at a forward end of the cable, wherein the cable comprises a crimp section at the forward end of the cable, the crimp section being adapted to be crimped to the connector, wherein the cable assembly comprises a thickening element arranged around the shielding layer and projecting radially outward with respect to the cable, the shielding layer being folded back to the crimp section over the thickening element. Such a cable assembly can be crimped to a part of the connector at the crimp section.

The solution according to the invention also comprises a connection assembly comprising a cable assembly as described and a connector, wherein the cable assembly and the connector are fixed to each other by a positive lock created by the thickening element.

Further, the solution according to the invention also includes a method of connecting a cable having at least one conductor surrounded by a shielding layer, which is in turn surrounded by a jacket, wherein the cable assembly comprises a crimp section at a forward end of the cable, the crimp section being adapted to be crimped to a connector, wherein a thickening element projecting radially outward with respect to the cable is arranged around the shielding layer, the shielding layer is folded back over the thickening element and the connector is crimped to the cable at the crimp section.

When pulling on the cable of a connection assembly according to the invention, the thickening element creates a positive locking between the cable and the connector resulting in a much higher connection strength between the cable and the connector. When the shielding layer is folded back over the thickening element and the connector is crimped onto the folded back shielding layer, the thickening element is trapped inside a pocket of the shielding layer, thereby creating a self-locking effect when trying to pull the cable away from the connector.

The solution according to the invention can be combined as desired and further improved by the further following embodiments that are advantageous on their own, in each case.

The value by which the thickening element projects radially outward with respect to the cable can be more than 10% of the diameter of the cable, preferably 20% or more. The higher the value is, the better the positive locking effect is. Accordingly, values of 50% or more of the cable diameter are even more preferred. The value of the projection can also be expressed relative to the thickness of the conductors. The thickening element might, for example, project by a value that is at least 50% of the diameter of a conductor. As the effect will not get any better if the value is greater than 100% of the diameter of the cable, this value can be regarded as an upper limit.

In order to further improve the connection strength, the thickening can be positively locked along a longitudinal direction of the cable by the front surface of the jacket, the longitudinal direction being the direction in which the cable extends away from the forward end. This can be achieved for example when a surface of the thickening element abuts the front surface of the jacket or at least an edge of the front surface. The thickening element can, for example, be attached around the shielding layer in an area where the shielding layers extends out of the jacket. The thickening element can then be brought into contact with the front surface of the jacket to create the positive locking. After this, the shielding layer can be folded back to the crimp section over the thickening element and the connector can be crimped to the cable in the crimp section.

The thickening element can extend around the entire circumference of the cable. In an alternative, it can be sufficient if the thickening element extends only around a part of the circumference.

When the thickening element extends around the entire circumference of the cable, the thickening element can be closed in the circumferential direction. However, in order to make it possible that the thickening element is attached to the cable when the cable is already at least partially attached to the connector, the thickening element can be open in the circumferential direction, at least in an attachment state. For example, the thickening element can be elastic so that it can be bent open for attaching the cable. When the cable is attached, the thickening element will close the gap automatically due to elastic forces.

The thickening element can be toroidal. The conductors and the shielding layer can run through the hole in the middle of the torus, and the shielding layer can be folded back over the torus. The shielding layer then only rests against round surfaces but not against sharp edges. This can prevent the shielding layer from breaking when force is applied as such sharp edges might cut into the shielding layer.

The torus can be closed or open in the circumferential direction. A closed torus might, for example, be produced as a plastic part by injection moulding. Such a closed torus can be slid over the cable from the forward end. The shielding layer can then be folded back over the torus. In an alternative, the torus can be open, meaning that the toroidal shape is non-continuous along a circumference. Such an open torus can be opened from the side so that the cable can be inserted into the hole sideways. Mounting the thickening element to the cable is thus easier and can still be achieved when, for example, the connector is already partially connected to the cable at the forward end.

The thickening element can be made from wire, in particular from copper wire. For example, copper wire can be wrapped around the shielding layer forming a torus. Copper wire is electrically conductive and can thus help to improve the resistance value when the shielding is used to reduce electrical noise. Copper wire might already be available for producing the cable as, in many cases, copper wire is used for cables. Therefore, the production process is simpler than when different materials are used. For example, the copper wire could be separated from the conductors of the cable. However, it is preferred if the copper wire has a larger diameter than the conductors of the cables in order to achieve a better locking effect.

In another embodiment, the thickening element has an L-shaped cross-section, the short section of the L being a radially projecting collar located towards the forward end of the cable, the long section being located towards the crimp section. The long section can rest against the jacket, creating a large contact area between the jacket and the long section. The long section can be part of the crimp section. When a part of the connector is crimped to the cable, the long section can also, at least partially, be deformed and be fixed to the cable.

The radially projecting collar can preferentially extend perpendicular to a length direction of the cable. However, the collar could also have an inclination towards the cable.

The thickening element can be made from sheet metal or from a tube, in particular if the thickening element has an L-shaped cross-section. Such a thickening element might be easy to manufacture by punching, stamping and/or deep drawing.

Parts of the thickening element that are in contact with the shielding layer can be rounded in order to avoid that the thickening element cuts into the shielding layer when force is applied. For example, a thickening element with a radially projecting collar could have rounded edges on the collar. However, in some cases it might be preferred to have sharp edges in order to prevent the shielding layer from slipping over the thickening element. Sharp edges can bite into the shielding layer, thereby creating a higher retention force when pulling on the cable. When designing a thickening element with sharp edges, the design of the edges must be such that they only bite into the shielding layer but do not cut the shielding layer.

The thickening element might also comprise grip-enhancing features that do not have sharp edges. For example, a wave-like structure or a corrugated surface can be provided on the surface of the thickening element, in particular on the long section of an L-shaped thickening element.

The thickening element can be made from a variety of materials. It can be made from metal, particularly from copper. Since metals are electrically conductive, a thickening element made from metal can help to lower the resistance between the shielding layer and the connector. The thickening element could also be made from plastic. Plastic is usually cheaper and easier to manufacture than metal. Such a thickening element could, for example, be made by injection molding.

The conductors of the cable are preferably electronically conducting conductors with an electrically conductive core and an insulating material around the core. However, in an alternative, the conductors could also be electrically conductive conductors without insulation or optical conductors.

The shielding layer of the cable is preferably electrically conductive in order to achieve a reduction of electrical noise. In an alternative, the shielding layer can only serve to achieve a mechanical shielding effect.

In a preferred embodiment, the shielding layer is a braiding. Compared to other types of shielding layers like foils, a braiding is more stable and can take higher pulling forces.

In order to facilitate the mounting, a tape, in particular an electrically conductive tape like a copper tape, can be wrapped around the shielding layer in the crimp section. Such a tape provides a smooth surface and can, for example, help to avoid that single strands of a braiding stand out and create a short circuit.

The thickening element can be a separate part. In an alternative, the thickening element can be part of one of the elements of the cable. It can for example be made by thickening a part of the jacket. Such an embodiment can be cheaper and easier to manufacture.

In the connection assembly according to the invention, the connector is preferably crimped to the shielding layer of the cable in the crimp section.

The invention will be described hereinafter in greater detail and in an exemplary manner using advantageous embodiments and with reference to the drawings. The described embodiments are only possible configurations in which, however, the individual features as described above can be provided independently of one another or can be omitted.

In the drawings:
- Fig. 1: shows a schematic perspective view of a first embodiment of a cable assembly according to the invention;
- Fig. 2: shows a schematic perspective view of a first embodiment of a connection assembly according to the invention;
- Fig. 3: shows a schematic sectional view of the connection assembly according to Fig. 2;
- Fig. 4: shows a schematic perspective view of a second embodiment of a connection assembly according to the invention;
- Fig. 5: shows a schematic sectional view of the connection assembly of Fig. 4.

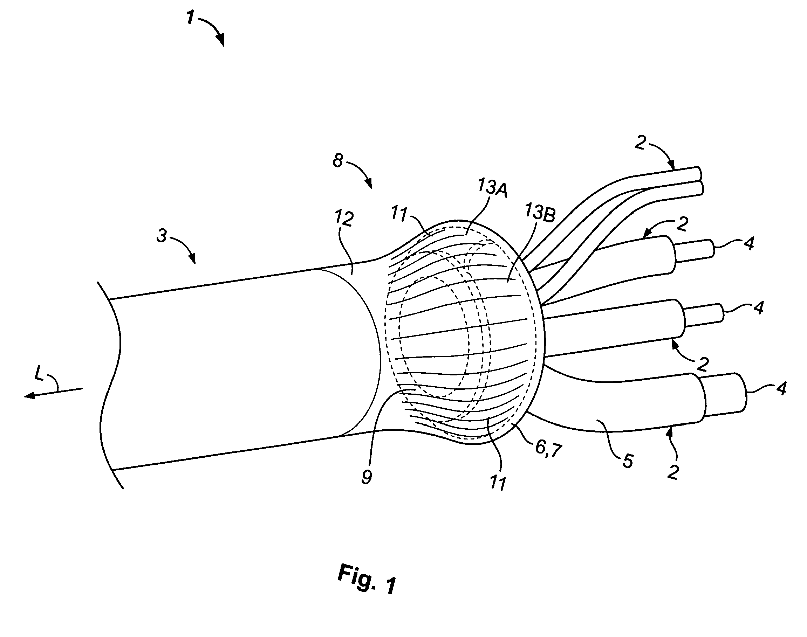

Fig. 1 shows a cable assembly 1 according to the invention. The figure is optimized for an easy understanding. Some parts have therefore been omitted, in particular inside the cable 3. The cable assembly 1 comprises several conductors 2 in the centre of the cable 3. The conductors 2 are electrical conductors. Three of the conductors 2 comprise an electrically conductive core 4 and an insulating material 5 around the core 4.

The cable 3 further comprises a shielding layer 6 surrounding the conductors 2. The shielding layer 6 can for example be a braiding 7. A jacket 10 surrounds the shielding layer 6 and provides the outer insulation of the cable assembly 1. At a forward end 8 of the cable 3, the shielding layer 6 extends out of a front surface 9 of a jacket 10. A thickening element 11 is arranged around the shielding layer 6 and projects radially outward with respect to the longitudinal direction L of the cable 3. The shielding layer 6 is folded back to a crimp section 12, at which the cable assembly 1 can be crimped to a connector 14 (not shown in Fig. 1).

When the connector 14 is crimped onto the crimp section 12 and thus on the fold-back section of the shielding layer 6 extending in the crimp section 12, the thickening element 11 is enclosed by the shielding layer 6. As the thickening element 11 projects radially outward, it avoids that the connector 14 can be pulled away from the cable assembly 1 over the forward end 8. The thickening element 11 creates a positive locking between the connector 14, for example the crimp part 18 of the connector 14, and the cable assembly 1, as will be explained in more detail below.

The thickening element shown in Fig. 1 is toroidal. It is made from wire, more specifically from copper wire. A short piece of copper wire has been wrapped around the shielding layer 6. In Fig. 1, the two ends 13A, 13B of the copper wire can be seen in the upper part. Between the two ends 13A, 13B, a small gap is still visible.

The thickening element 11 abuts the front surface 9 of the jacket 10. The thickening element 11 is positively locked along the longitudinal direction L of the cable 3 by the front surface 9 of the jacket 10. The value by which the thickening element 11 shown in Fig. 1 projects radially outward is about 15%. However, this value can also be chosen to be higher or lower. The higher this value is, the better the locking effect is. With the thickening element 11 projecting radially outward by 15% on each side, the thickening element 11 has a diameter that is 30% larger than the diameter of the cable 3 outside the area where contact with the connector is made. 100% of the cable diameter can be regarded as an upper limit, as the effect will not increase when the value exceeds 100% of the cable diameter. The thickness of the jacket 10 can also be used a guide for choosing the value by which the thickening element 11 projects radially outward. The value should not be less than the thickness of the jacket 10 to achieve a good effect.

The thickening element 11 of Fig. 1 is toroidal. Thus, there are no sharp edges in the contact area between the thickening element 11 and the shielding layer 6 that could potentially damage or cut the shielding layer 6.

The thickening element 11 is a separate element that can be detached from the rest of the cable 3. In an alternative, the thickening element 11 could be a part of the cable 3. For example, the thickening element 11 could be a thickened portion of the jacket 10.

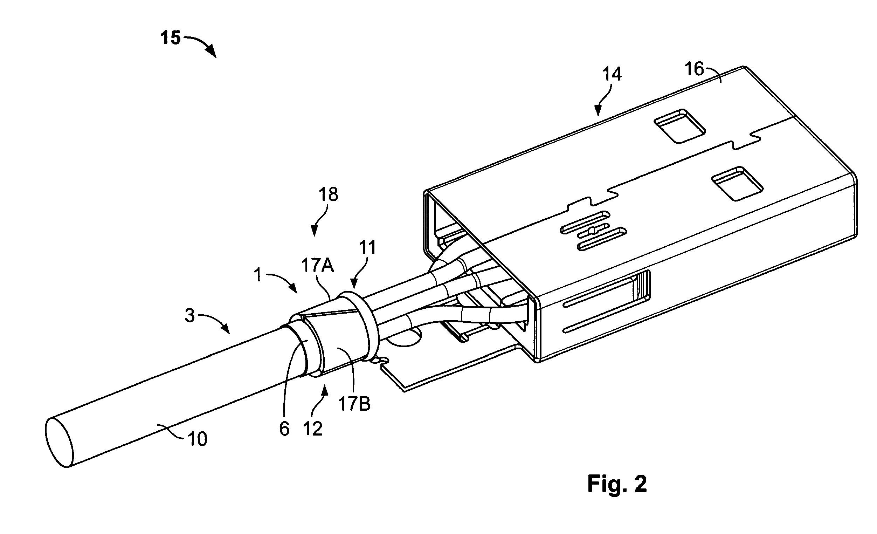

In Fig. 2, the cable assembly 1 of Fig. 1 is shown together with a connector 14, the two thus forming a connection assembly 15 according to the invention. The connector 14 comprises a housing 16 made from sheet metal. The housing 16 thus provides an electrical shielding for the inner parts of the connector 14. The metal sheet forming the housing 16 continues towards the cable 3. A crimp part 18 of the metal sheet is crimped around the cable assembly 1 in the area of the crimp section 12. The two parts 17A, 17B of this crimp part 18 of the connector 14 have been wrapped around the cable assembly 1. The two parts 17A, 17B press the shielding layer 6 which has been folded back to the crimp section 12 over the thickening element 11 onto the jacket 10. The thickening element 11 is thus trapped in a pocket of the shielding layer 6 and creates a positive locking between the cable assembly 1 and the crimp part 18 of the connector 14. Thus, when pulling the cable 3 away from the connector 14, the force necessary to remove the cable is much higher than it would be without the thickening element 11.

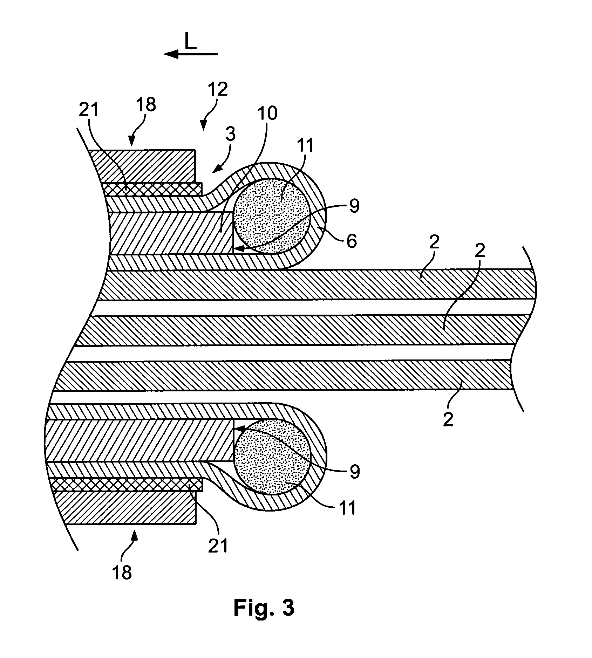

Fig. 3 shows a sectional view of a part of the connection assembly 15 of Fig. 3. In the cable 3, a shielding layer 6 extends out of a front surface 9 of a jacket 10 and is folded back to a crimp section 12 over the thickening element 11. By abutting the front surface 9 of the jacket 10, the thickening element 11 is positively locked along a longitudinal direction L along which the cable 3 extends away from the forward end 8 and the front surface 9. A crimp part 18 of the connector is crimped onto the cable 3 in the crimp section 12, pressing the folded-back part of the shielding layer 6 onto the jacket 10. As the thickening element 11 projects radially outward with respect to the cable 3, it creates a positive locking between the crimp part 18 of the connector and the cable 3. When pulling at the connector 14, the crimp part 18 thereof abuts against the thickening element 11. Fig. 3 schematically also shows the conductors 2 running inside the cable 3.

In order to fix the shielding layer 6 to the cable 3, a tape, in particular an electrically conductive tape 21 like copper tape, has been wrapped around the shielding layer 6 in the crimp section 12. If the shielding layer 6 is for example a braiding 7, this tape prevents single strands of the braiding 7 from making contact with, for example, the conductors 2, which would create a short circuit.

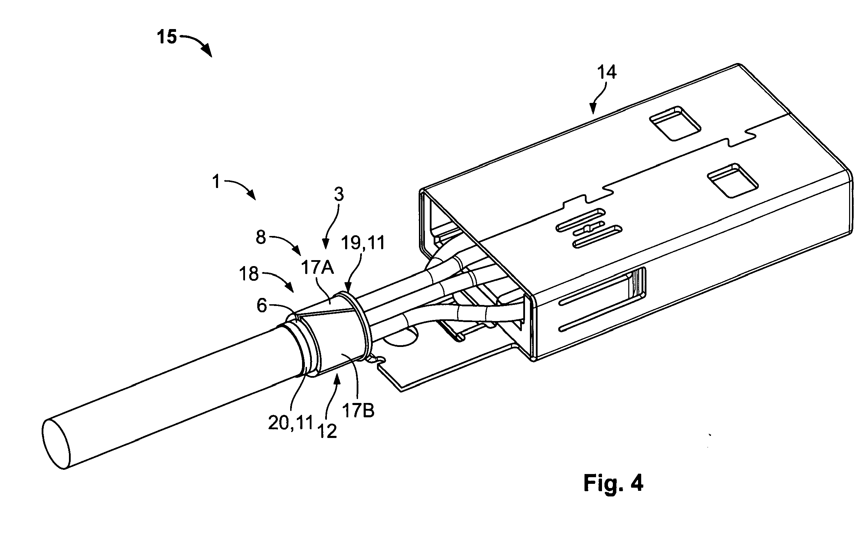

Fig. 4 shows a second embodiment of a connection assembly 15 according to the invention. The connector 14 shown in Fig. 4 is the same connector 14 as shown in Fig. 2. However, the cable assembly 1 of Fig. 4 is different from the one shown in Fig. 2. In particular, the thickening element 11 of the cable assembly 1 is different from the one shown in Fig. 1. The thickening element 11 of Fig. 4 is sleeve-shaped, the sleeve having an L-shaped cross-section, the short section of the L being a radially projecting collar 19 that is located towards the forward end 8 of the cable 3 and the long section 20 being located towards the crimp section 12. Again, parts 17A, 17B of the crimp part 18 of the connector 14 are crimped onto the cable assembly 1.

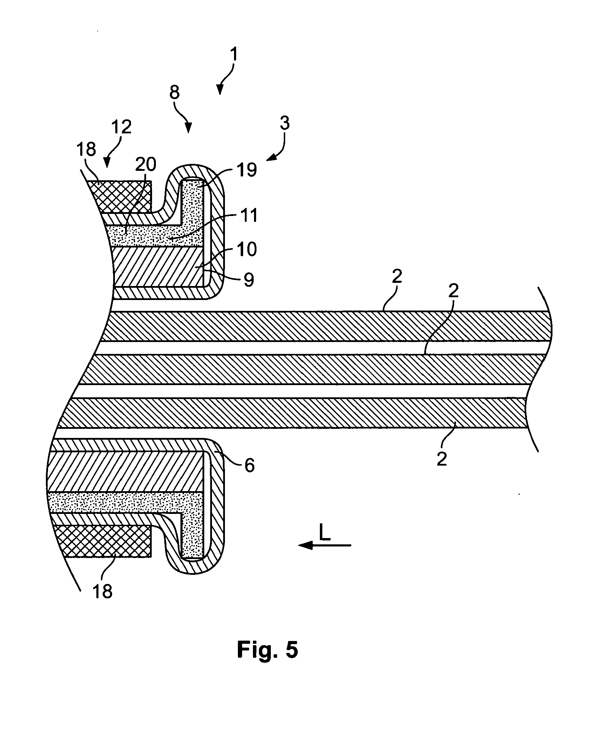

Fig. 5 shows a sectional view of the embodiment of Fig. 4 in which the details can be seen more easily. Again, conductors 2, which might be insulated or non-insulated electrical conductors or optical conductors, are surrounded by a shielding layer 6 that extends out of a front surface 9 of a jacket 10. The thickening element 11 is attached to the outside of the jacket 10 and the shielding layer 6 is folded back onto a crimp section 12 over the thickening element 11. The crimp part 18 of the connector is then crimped onto the cable assembly 1, pressing the shielding layer 6 onto the thickening element 11 which is a part of the crimp section 12.

The thickening element 11 has an L-shaped cross-section comprising a radially projecting collar 19, which is located towards the forward end 8 of the cable 3 and a long section 20 that is located towards the crimp section 12. The long section 20 thus forms a tube around the jacket 10 of the cable 3. The radially projecting collar 19 is shown to extend in a direction that is perpendicular to the longitudinal direction L of the cable 3. However, the radially projecting collar 19 could also be inclined to the cable 3 at another angle.

The radially projecting collar 19 of the thickening element 11 of Figs. 4 and 5 has sharp edges. This can help to improve the retention force, as the sharp edges can bite or cut into the shielding layer 6. However, it should be avoided that the edges cut the shielding layer 6 into two pieces.

The thickening element 11 of Figs. 4 and 5 can be made, for example, from sheet metal by punching and/or stamping.

The thickening elements 11 shown in the figures are made from metal. However, they could also be made from plastic or other materials. Such thickening elements might be cheaper and easier to manufacture than thickening elements made from metal.

Similar to the thickening element 11 of Figs. 1 to 3, the thickening element 11 of Figs. 4 and 5 can also be open in a circumferential direction around the cable 3. Such an open thickening element 11 can be attached to the cable 3 even if the cable 3 is already partially attached to the connector 14, for example if the conductors 2 are already soldered to the connector 14. The gap in the circumferential direction can be bent open and the cable 3 can be inserted. Subsequently, the thickening element can be closed in the circumferential direction, for example by abutting two ends of the thickening element.

In addition to the radially outward projecting collar 19, the thickening element 11 could also have a radially inward projecting section, which can for example be brought into contact with the front surface 9 of the jacket 10, creating a positive locking between the thickening element 11 and the jacket 10.

Furthermore, the thickening element 11 could have grip-enhancing features like a wave structure or a corrugated surface, for example on the long section 20.

**Reference Signs**

| | |
|---|---|
| 1 | cable assembly |
| 2 | conductor |
| 3 | cable |
| 4 | core |
| 5 | insulating material |
| 6 | shielding layer |
| 7 | braiding |
| 8 | forward end |
| 9 | front surface |
| 10 | jacket |
| 11 | thickening element |
| 12 | crimp section |
| 13A, 13B | ends of copper wire |
| 14 | connector |
| 15 | connection assembly |
| 16 | housing |
| 17A, 17B | parts of the crimp part |
| 18 | crimp part |
| 19 | radially projecting collar |
| 20 | long section |
| 21 | electrically conductive tape |
| L | longitudinal direction |

## Claims

1. Cable assembly (1) for contacting a connector (14) comprising a cable (3) having at least one conductor (2) surrounded by a shielding layer (6), which in turn is surrounded by a jacket (10), wherein the shielding layer (6) extends out of a front surface (9) of the jacket (10) at a forward end (8) of the cable (3), wherein the cable (3) comprises a crimp section (12) at the forward end (8) of the cable (3), the crimp section (12) being adapted to be crimped to the connector (14), wherein the cable assembly (1) comprises a thickening element (11) arranged around the shielding layer (6) and projecting radially outward with respect to the cable (3), the shielding layer (6) being folded back to the crimp section (12) over the thickening element (11).

2. Cable assembly (1) according to claim 1, wherein the thickening element (11) is positively locked along a longitudinal direction (L) of the cable (3) by the front surface (9) of the jacket (10).

3. Cable assembly (1) according to one of claims 1 or 2, wherein the thickening element (11) is toroidal.

4. Cable assembly (1) according to one of claims 1 to 3, wherein the thickening element (11) is made from wire, preferably from copper wire.

5. Cable assembly (1) according to one of claims 1 to 4, wherein the thickening element (11) has an L-shaped cross-section, the short section of the L being a radially projecting collar (19) located towards the forward end (8) of the cable (3), the long section (20) being located towards the crimp section (12).

6. Cable assembly (1) according to one of claims 1 to 5, wherein the conductors (2) are electrical conductors with an electrically conductive core (4) and an insulating material (5) around the core (4).

7. Cable assembly (1) according to one of claims 1 to 6, wherein the shielding layer (6) of the cable (3) is electrically conductive.

8. Cable assembly (1) according to one of claims 1 to 7, wherein the shielding layer (6) is a braiding (7).

9. Cable assembly (1) according to one of claims 1 to 8, wherein a tape, in particular an electrically conductive tape (21), is wrapped around the shielding layer (6) in the crimp section (12).

10. Connection assembly (15) comprising a cable assembly (1) according to one of claims 1 to 9 and a connector (14), wherein the cable assembly (1) and the connector (14) are fixed to each other by a positive locking created by the thickening element (11).

11. Connection assembly (15) according to claim 10, wherein the connector (14) is crimped to the shielding layer (6) of the cable (3) in the crimp section (12).

12. Method of connecting a connector (14) to a cable (3) having at least one conductor (2) surrounded by a shielding layer (6), which is in turn surrounded by a jacket (10), wherein a cable (3) comprises a crimp section (12) at a forward end (8) of the cable (3), the crimp section (12) being adapted to be crimped to a connector (14), wherein a thickening element (11) projecting radially outward with respect to the cable (3) is arranged around the shielding layer (6), the shielding layer (6) is folded back over the thickening element (11) and the connector is crimped to the cable (3) at the crimp section (12).
